# EUROPÄISCHE PATENTANMELDUNG

(11) **EP 3 583 994 A1**
(43) Veröffentlichungstag der Anmeldung: **25.12.2019**
(21) Anmeldenummer: 18400016.4
(22) Anmeldetag: 18.06.2018
(51) Int. Cl.: B01D 53/00, B01D 53/14, C01B 3/52, C10K 1/08

(54) **ANLAGE ZUR REINIGUNG VON ROHSYNTHESEGAS MIT TURBOEXPANDER**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt (DE); Gubrinski, Alfred, 64390 Erzhausen (DE); Puri, Pankaj, 121004 Faridabad (IN); Rappold, Dorit, 60487 Frankfurt (DE)
(74) Vertreter: Dropsch, Holger

(57) **Zusammenfassung**

Die Erfindung betrifft ein Verfahren zur Abtrennung unerwünschter; insbesondere acider Gasbestandteile, beispielsweise Kohlendioxid und Schwefelwasserstoff, aus einem Rohsynthesegas durch Gaswäsche mit einem Waschmittel. Erfindungsgemäß werden die bei der Entspannung des beladenen Waschmittels erhaltenen Flashgase einem Rekompressor zugeführt, um diese nach der Rekompression zum Rohsynthesegas zurückzuführen und somit stofflich zu nutzen. Alternativ oder zusätzlich können die Flashgase auch einer Entspannungsturbine zugeführt werden, wobei sie zur Rückgewinnung von Kälte und mechanischer Arbeit dienen. Falls der Rekompressor und/oder die Entspannungsturbine mehrstufig ausgeführt werden, werden die bei verschiedenen Druckstufen erhaltenen Flashgase bevorzugt einer korrespondierenden Druckstufe des Rekompressors bzw. der Entspannungsturbine zugeführt.

## Beschreibung

### Gebiet der Erfindung

Die Erfindung betrifft ein Verfahren zur Abtrennung unerwünschter, insbesondere acider Gasbestandteile, beispielsweise Kohlendioxid und Schwefelwasserstoff, aus Rohsynthesegas durch Gaswäsche mit einem Waschmittel. Die Erfindung betrifft ferner eine Anlage zur Durchführung eines solchen Verfahrens.

### Stand der Technik

Verfahren zur Abtrennung von unerwünschten Begleitstoffen aus technischen Rohgasen mittels physikalischer oder chemischer Absorption oder Gaswäsche sind aus dem Stand der Technik wohlbekannt. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS) und Cyanwasserstoff (HCN), von den erwünschten Synthesegasbestandteilen Wasserstoff (H₂) und Kohlenmonoxid (CO) sicher bis in den Spurenbereich entfernt werden. Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen.

Das als Waschmittel verwendete, mit den Störkomponenten beladene Methanol wird im Rectisol-Verfahren über Regenerierungsvorrichtungen im Kreis gefahren. In den Regenerierungsvorrichtungen wird das beladene Methanol von den absorbierten Gasen auf physikalischem Wege befreit. Dabei wird in einem ersten Regenerierungsschritt CO₂ durch Druckentspannung (sogenannte Flashregenerierung) und/oder Strippen mit einem Gas, beispielsweise Stickstoff, aus dem beladenen Methanol-Waschmittel entfernt. In einem weiteren oder alternativen Regenerierungsschritt werden die schwefelhaltigen Gase, COS und H₂S, durch Erhitzen abgetrieben (sogenannte Heissregenerierung).

Häufig wird angestrebt, ein möglichst CO₂-freies COS/H₂S-Gas zu erzeugen, da dessen wirtschaftlich interessante Weiterverarbeitung durch eine Vermischung mit CO₂ beeinträchtigt wird. Umgekehrt ist es ebenso erwünscht, ein möglichst von Schwefelverbindungen freies CO₂-Nebenprodukt zu erhalten. Bei dem ersten Regenerierungsschritt, bei dem CO₂ durch Flashregenerierung und/oder Strippen aus dem beladenen Methanol-Waschmittel entfernt wird, wird zumeist in unerwünschter Weise auch eine kleine Menge an Schwefelverbindungen in die Gasphase überführt. Daher schließt sich stromwärts bei der weiteren Behandlung der Gasphase ein sogenannter Reabsorptionsschritt an, bei dem die Gasphase in einem Reabsorber mit einer kleinen Methanolmenge gewaschen wird, wobei die Schwefelverbindungen aufgrund ihrer höheren Löslichkeiten in die flüssige Phase zurückbefördert werden. Der Reabsorber kann als separater Apparat oder in Kombination mit einer Flash- oder Strippkolonne ausgestaltet werden.

Beim Rectisol-Verfahren wird zwischen dem Standardverfahren und dem selektiven Rectisol-Verfahren unterschieden. Bei dem Standard-Rectisol-Verfahren werden die Begleitgase COS/H₂S und das CO₂ gemeinsam in einem Absorptionsschritt aus dem Rohsynthesegas abgetrennt. Dagegen werden bei dem sogenannten selektiven Rectisol-Verfahren die schwefelhaltigen Begleitgase COS/H₂S und das CO₂ jeweils in separaten, nacheinander ablaufenden Absorptionsschritten aus dem Rohsynthesegas abgetrennt. Diese selektive Absorption wird durch eine geeignete Einstellung der Verfahrensparameter, insbesondere des Mengenverhältnisses von Waschmittel und zu absorbierendem Gas, ermöglicht. Der Vorteil der selektiven Absorption liegt darin, dass das COS/H₂S- und das CO₂-Gas schon bei der Absorption zum größten Teil getrennt gehalten werden und nur der kleinere Teil bei der Regenerierung des Methanols getrennt werden muss. Auf diese Weise wird zudem die Gewinnung des enthaltenen Schwefels mit Hilfe von nachgeschalteten Verfahren wie beispielsweise dem Claus-Verfahren ermöglicht.

Die Flashregenerierung des mit aciden Gasbestandteilen beladenen Waschmittels wird in der Regel durch Entspannen in einen Flashbehälter hinein über ein Ventil oder sonstigen Durchflussbegrenzer durchgeführt. Hierbei geht allerdings mindestens ein Teil der für Volumenarbeit verfügbaren Energie verloren.

### Beschreibung der Erfindung

Aufgabe der Erfindung ist es daher, ein Verfahren und eine Anlage anzugeben, die die genannten Nachteile der aus dem Stand der Technik bekannten Verfahren vermeiden und bei denen insbesondere die zu entspannenden Flüssigkeiten energetisch genutzt werden.

Diese Aufgabe wird im Wesentlichen durch ein Verfahren mit den Merkmalen des Anspruchs 1 gelöst. Weitere, insbesondere bevorzugte Ausgestaltungen des erfindungsgemäßen Verfahrens finden sich in den Unteransprüchen. Die Erfindung betrifft ferner eine Anlage zur Durchführung eines solchen Verfahrens.

### Erfindungsgemäßes Verfahren:

Verfahren zur Reinigung eines Rohsynthesegases durch Gaswäsche mit einem Waschmittel, umfassend folgende Schritte:
(a) Bereitstellen und Zuführen des Rohsynthesegases zu einem Vorwäscher zur Entfernung von Spurenkomponenten wie NH₃ und HCN,
(b) Zuführen des gasförmigen Kopfprodukts des Vorwäschers zu einem H₂S-Wäscher zur Entfernung von H₂S,
(c) Zuführen des gasförmigen Kopfprodukts des H₂S-Wäschers zu einem CO₂-Wäscher zur Entfernung von CO₂,
(d) Ausleiten eines gereinigten Synthesegasstroms als gasförmiges Kopfprodukt des CO₂-Wäschers,
(e) Zuführen des flüssigen Sumpfprodukts des Vorwäschers zu mindestens einem Vorwäsche-Flashbehälter unter Entspannen, Zuführen des flüssigen Sumpfprodukts des mindestens einen Vorwasche-Flashbehälters zu mindestens einer Vorrichtung zur Flashregenerierung und/oder Heissregenerierung des Waschmittels unter Entspannen,
(f) Zuführen des flüssigen Sumpfprodukts des H₂S-Wäschers zu mindestens einem H₂S-Flashbehälter unter Entspannen, Zuführen des flüssigen Sumpfprodukts des mindestens einen H₂S-Flashbehälters zu einem Reabsorber unter Entspannen, Zuführen des flüssigen Sumpfprodukts des Reabsorbers zu mindestens einer Vorrichtung zur Flashregenerierung und/oder Heissregenerierung des Waschmittels unter Entspannen,
(g) Zuführen des flüssigen Sumpfprodukts des CO₂-Wäschers zu mindestens einem CO₂-Flashbehälter unter Entspannen, Zuführen des flüssigen Sumpfprodukts des mindestens einen CO₂-Flashbehälters zu einem Reabsorber unter Entspannen, Zuführen des flüssigen Sumpfprodukts des Reabsorbers zu mindestens einer Vorrichtung zur Flashregenerierung und/oder Heissregenerierung des Waschmittels unter Entspannen, **dadurch gekennzeichnet, dass** bei mindestens einem der Entspannungsschritte in den Verfahrensschritten (e), (f), (g) die jeweilige Flüssigkeit über eine Expansionsvorrichtung geführt wird.

### Erfihdungsgemäße Anlage:

Anlage zur Reinigung eines Rohsynthesegases durch Gaswäsche mit einem Waschmittel, umfassend folgende, in Fluidverbindung miteinander stehende Bestandteile und Baugruppen:
(a) Mittel zum Bereitstellen und Zuführen des Rohsynthesegases zu einem Vorwäscher zur Entfernung von Spurenkomponenten wie NH₃ und HCN,
(b) Mittel zum Zuführen des gasförmigen Kopfprodukts des Vorwäschers zu einem H₂S-Wäscher zur Entfernung von H₂S,
(c) Mittel zum Zuführen des gasförmigen Kopfprodukts des H₂S-Wäschera zu einem CO₂-Wäscher zur Entfernung von CO₂,
(d) Mittel zum Ausleiten eines gereinigten Synthesegasstroms als gasförmiges Kopfprodukt des CO₂-Wäschers,
(e) Mittel zum Zuführen des flüssigen Sumpfprodukts des Vorwäschers zu mindestens einem Vorwäsche-Flashbehälter unter Entspannen, Mittel zum Zuführen des flüssigen Sumpfprodukts des mindestens einen Vorwäsche-Flashbehälters zu mindestens einer Vorrichtung zur Flashregenerierung und/oder Heissregenerierung des Waschmittels unter Entspannen,
(f) Mittel zum Zuführen des flüssigen Sumpfprodukts des H₂S-Wäschers zu mindestens einem H₂S-Flashbehälter unter Entspannen, Mittel zum Zuführen des flüssigen Sumpfprodukts des mindestens einen H₂S-Flashbehälters zu einem Reabsorber unter Entspannen, Mittel zum Zuführen des flüssigen Sumpfprodukts des Reabsorbers zu mindestens einer Vorrichtung zur Flashregenerierung und/oder Heissregenerierung des Waschmittels unter Entspannen,
(g) Mittel zum Zuführen des flüssigen Sumpfprodukts des CO₂-Wäschers zu mindestens einem CO₂-Flashbehälter unter Entspannen, Mittel zum Zuführen des flüssigen Sumpfprodukts des mindestens einen CO₂-Flashbehälters zu einem Reabsorber unter Entspannen, Mittel zum Zuführen des flüssigen Sumpfprodukts des Reabsorbers zu mindestens einer Vorrichtung zur Flashregenerierung und/oder Heissregenerierung des Waschmittels unter Entspannen,
**dadurch gekennzeichnet, dass** mindestens eine Expansionsvorrichtung vorhanden ist, über die die jeweilige Flüssigkeit geführt und somit entspannt wird.

Unter Waschmittel, synonym Absorptionsmittel oder Lösungsmittel, werden im Rahmen der vorliegenden Erfindung Stoffe oder Stoffgemische verstanden, die unter Verfahrensbedingungen als Flüssigkeit vorliegen, eine Absorptionskapazität für die aus dem Gas abzuscheidenden Komponenten aufweisen und mittels physikalischer Methoden, beispielsweise durch Flashen oder mittels Heissregenerierung, regeneriert werden können.

Unter Flashen wird eine rasche, bevorzugt schlagartige Druckentspannung einer Flüssigkeit verstanden, die bevorzugt beim Eintreten in einen Behälter über einen Durchflussbegrenzer, beispielsweise ein Ventil, erfolgt. Die dabei freigesetzten Gase werden als Flashgase bezeichnet.

Der Vorwäscher, der H₂S-Wäscher und der CO₂-Wäscher müssen nicht zwangsweise als separate, über Rohrleitungen verbundene Apparate ausgeführt werden, sondern können im Sinne der vorliegenden Erfindung auch Abschnitte einer oder mehrerer integrierter Absorptionskolonnen sein.

Unter Fluidverbindung zwischen zwei Bereichen wird jegliche Art von Verbindung verstanden, die es ermöglicht, dass ein Fluid, beispielsweise das flüssige Waschmittel, von dem einen zu dem anderen der beiden Bereiche strömen kann, unbeachtlich etwaiger zwischengeschalteter Bereiche, Bauteile, Armaturen oder Vorrichtungen.

Unter Mitteln zum Bereitstellen, Zuführen oder Ausleiten von Stoffströmen zu bzw. aus Verfahrensstufen bzw. Anlagenteilen werden alle Vorrichtungen, Bauteile und Apparate verstanden, deren Nutzung der Fachmann in der jeweiligen Situation in Betracht zieht, insbesondere Vorratsbehälter, Rohrleitungen, Absperr- und Dosiervorrichtungen wie beispielsweise Ventile, Fördervorrichtungen wie beispielsweise Pumpen, Gebläse, Verdichter.

Etwaige Druckangaben in der Einheit bar(a) beziehen sich auf den Absolutdruck in bar, absolut, sofern nicht im Einzelfall anders angegeben.

Der Erfindung liegt die Erkenntnis zugrunde, dass die bei der Flashentspannung der beladenen Waschmittel freigesetzte Volumenarbeit vorteilhaft zur Energierückgewinnung genutzt werden kann. Hierdurch wird die Energiebilanz des Gesamtverfahrens deutlich verbessert.

### Weitere bevorzugte Ausgestaltungen der Erfindung

Eine bevorzugte Ausgestaltung des erfindungsgemäßen Verfahrens bzw. der erfindungsgemäßen Anlage ist dadurch gekennzeichnet, dass als Expansionsvorrichtung ein Turboexpander verwendet wird. Diese Ausgestaltung ermöglicht die Energierückgewinnung in besonders effektiver Weise.

Eine weitere bevorzugte Ausgestaltung des erfindungsgemäßen Verfahrens bzw. der erfindungsgemäßen Anlage ist dadurch gekennzeichnet, dass die Expansionsvorrichtung mehrstufig ausgeführt ist. Auf diese Weise kann die Energierückgewinnung durch mehrstufiges Entspannen des beladenen Waschmittels besonders effektiv erfolgen, da sie der entsprechenden, ein ähnliches Druckniveau aufweisenden Stufe der mehrstufigen Expansionsvorrichtung zugeführt werden können.

Eine bevorzugte Ausgestaltung des erfindungsgemäßen Verfahrens ist dadurch gekennzeichnet, dass das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether. Alle diese Absorptionsmittel dienen der Absorption von Kohlendioxid und Schwefelverbindungen, sind chemisch stabil und gegenüber den abzuscheidenden Stoffen chemisch inert und können mittels Druckentspannung bzw. Heissregenerierung regeneriert werden.

### Ausführungsbeispiel

Weitere Merkmale; Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigt die einzige Figur:

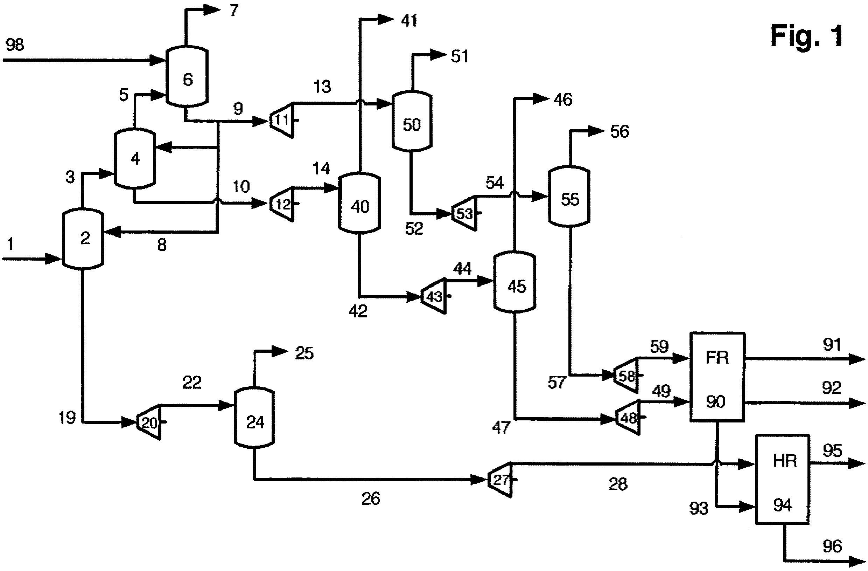

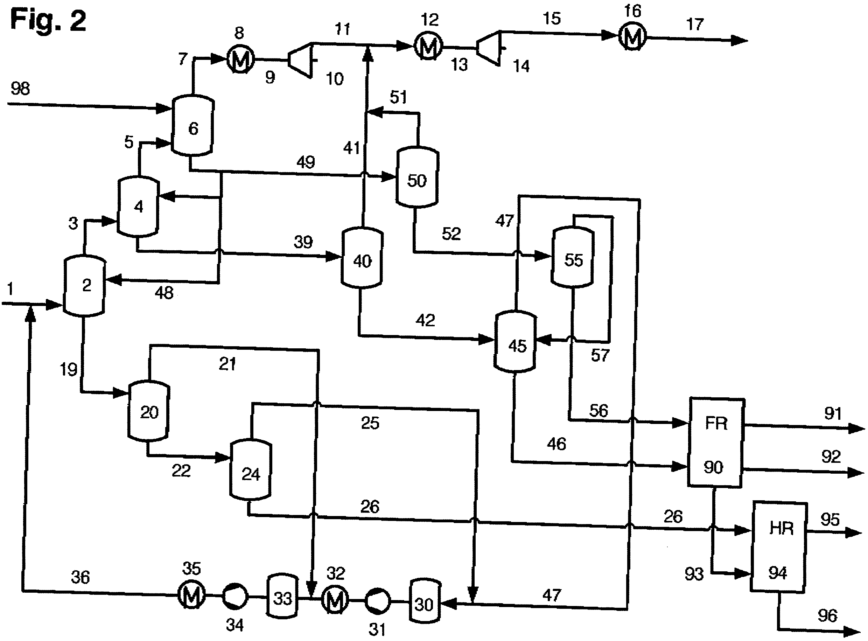

- Fig. 1: eine schematische Darstellung des erfindungsgemäßen Verfahrens bzw. der erfindungsgemäßen Anlage nach einer bevorzugten Ausgestaltung,

In der in Fig. 1 gezeigten, schematischen Darstellung des erfindungsgemäßen Verfahrens bzw. der erfindungsgemäßen Anlage nach einer bevorzugten Ausgestaltung Wird Rohsynthesegas über Leitung 1 einer Waschvorrichtung, umfassend die Wäscher 2, 4 und 6, zugeführt. Die einzelnen Wäscher 2, 4, 6 können dabei als separate Apparate oder auch als Bereiche einer integrierten Wasch- bzw. Absorptionskolonne ausgestaltet werden. Als Waschmittel wird im vorliegenden Ausführungsbeispiel kaltes Methanol verwendet, dass über Leitung 98 zu der Waschvorrichtung geführt wird. Dabei werden zumeist mehrere Methanolströme verschiedener Reinheits- bzw. Regenerierungsgrade der Waschvorrichtung an verschiedenen Stellen in dem Fachmann bekannter Weise zugeführt (bildlich nicht dargesteilt).

Über Leitung 1 tritt das Rohsynthesegas mit einem typischen Druck von 20 bis 70 bar(a) in den Vorwäscher 2 zur Entfernung von Spurenkomponenten wie NH₃ und HCN ein und wird dort mittels über Leitung 8 herangeführtes, mit aciden Gasbestandteilen teilbeladenes Methanol gewaschen. Das Kopfprodukt des Vorwäschers 2 wird über Leitung 3 dem H₂S-Wäscher 4 zugeführt und dort ebenfalls mit teilbeladenem Methanol gewaschen. Das Kopfprodukt des H₂S-Wäschers 4 wird über Leitung 5 dem CO₂-Wäscher 6 zugeführt und dort mit Methanol hoher Reinheit gewaschen, das über Leitung 98 herangeführt und durch heißregeneriertes Methanol, frisches Reinmethanol oder Mischungen davon gebildet wird. Das Kopfprodukt des CO₂-Wäschers 6 wird über Leitung 7 als Reinsynthesegas aus dem Verfahren ausgeleitete und der weiteren, bildlich nicht dargestellten Aufarbeitung oder Verwendung zugeführt. Auch das Reinsynthesegas kann über eine Expansionsvorrichtung zur Rückgewinnung von Kälte und mechanischer Arbeit geführt werden, wenn sein Druck für die nachfolgende Aufarbeitung oder Verwendung abgesenkt werden soll.

Das im Vorwäscher 2 mit Spurenkomponenten wie NH₃ und HCN beladene Methanol-Waschmittel wird über Leitungen 19 und 22 zu dem Vorwäsche-Flashbehälter 24 geleitet, wobei es über die Entspannungsturbine 20 geführt und dabei auf typischerweise 15 bis 40 bar(a) entspannt wird. Das dabei erhaltene, gasförmige Kopfprodukt wird über Leitung 25 der weiteren, bildlich nicht dargestellten Aufarbeitung oder Verwendung zugeführt. Das flüssige Sumpfprodukt des Vorwäsche-Rashbehälters 24 wird über Leitung 26, Entspannungsturbine 27 und Leitung 28 zu einer Heissregenerierungsvorrichtung 94 geführt.

Das im H₂S-Wäscher 4 mit Schwefelwasserstoff beladene Methanol-Waschmittel wird über Leitung 10, Entspannungsturbine 12 und Leitung 14 einem ersten H₂S-Flashbehälter 40 zugeführt und dort auf typischerweise 15 bis 40 bar(a) entspannt. Das dabei erhaltene, gasförmige Kopfprodukt wird über Leitung 41 der weiteren, bildlich nicht dargestellten Aufarbeitung oder Verwendung zugeführt. Das flüssige Sumpfprodukt des ersten H₂S-Flashbehälters 40 wird über Leitung 42, Entspannungsturbine 43 und Leitung 44-zu einem zweiten H₂S-Flashbehälter 45 geführt und dort auf typischerweise 1,5 bis 15 bar(a) entspannt.

Das dabei erhaltene, gasförmige Kopfprodukt wird über Leitung 46 der weiteren, bildlich nicht dargestellten Aufarbeitung oder Verwendung zugeführt. Das flüssige Sumpfprodukt des zweiten H₂S-Flashbehälters 45 wird über Leitung 47, Entspannungsturbine 48 und Leitung 49 zu einer Flashregenerierungsvorrichtung 90 geführt.

Das im CO₂-Wäscher 6 mit Kohlendioxid beladene Methanol-Waschmittel wird über Leitung 9, Entspannungsturbine 11 und Leitung 13 einem ersten CO₂-Flashbehälter 50 zugeführt und dort auf typischerweise 15 bis 40 bar(a) bar(a) entspannt. Das dabei erhaltene, gasförmige Kopfprodukt wird über Leitung 51 der weiteren, bildlich nicht dargestellten Aufarbeitung oder Verwendung zugeführt. Das flüssige Sumpfprodukt des ersten CO₂-Flashbehälters 50 wird über Leitung 52, Entspannungsturbine 53 und Leitung 54 zu einem zweiten CO₂-Flashbehälter 55 geführt und dort auf typischerweise 1,5 bis 15 bar(a) entspannt.

Das dabei erhaltene, gasförmige Kopfprodukt wird über Leitung 56 der weiteren, bildlich nicht dargestellten Aufarbeitung oder Verwendung zugeführt. Das flüssige Sumpfprodukt des zweiten CO₂-Flashbehälters 55 wird über Leitung 57, Entspannungsturbine 58 und Leitung 59 zu der Flashregenerierungsvorrichtung 90 geführt.

Es ist vorteilhaft, den zweiten Flashbehälter 45 als Reabsorber auszugestalten, in dem die Gasphase vor dem Ausleiten über Leitung 56 mit einer kleinen Methanolmenge gewaschen wird. Hierdurch werden Schwefelverbindungen, die noch als Spuren in der in Flashbehälter 55 eintretenden Flüssigkeit vorhanden sind und die bei der Flashentspannung in unerwünschter Weise in die Gasphase mitgerissen wurden, aufgrund ihrer höheren Löslichkeiten in die flüssige Phase zurückbefördert.

Das in die nur schematisch dargestellte Flashregenerierungsvorrichtung 90 einführte, beladene Methanol-Waschmittel wird dort entspannt, wobei schließlich ein CO₂-Produktstrom mit hoher CO₂-Reinheit und ein CO₂-Abgasstrom mit geringerer CO₂-Reinheit erhalten und über Leitungen 91 und 92 aus dem Verfahren ausgeleitet werden. Die dabei erforderliche Vorgehensweise und verwendeten Druckstufen sowie die erforderliche Ausgestaltung der Flashregenerierungsvorrichtung sind dem Fachmann an sich bekannt. Ferner wird ein im Wesentlichen mit Schwefelwasserstoff beladenes Methanol-Waschmittel erhalten, das über Leitung 93 zu der Heissregenerierungsvorrichtung 94 geführt wird. Auch diese ist bildlich nur schematisch dargestellt, wobei die einzelnen Verfahrensschritte und Verfahrensbedingungen der Heissregenerierung sowie die erforderliche Ausgestaltung der Heissregenerierungsvorrichtung dem Fachmann bekannt sind. Als Produkt der Heissregenerierung wird ein Methanol-Waschmittelstrom hoher Reinheit (sog. Feinwasch-Methanol) erhalten, der - gegebenenfalls nach weiteren Behandlungsschritten und unter Zugabe von Frischmethanol - über Leitung 98 zum CO₂-Wäscher 6 zurückgeführt wird. Ferner wird als weiteres Produkt der Heissregenerierung ein Sauergasstrom erhalten, der Schwefelwasserstoff sowie weitere Schwefelkomponenten enthält und über Leitung 95 aus dem Verfahren ausgeleitet und der weiteren Behandlung oder Verarbeitung zugeführt wird. Üblicherweise wird der Sauergasstrom einer nicht bildlich dargestellten, beispielsweise nach dem Claus-Verfahren arbeitenden Schwefelrückgewinnungsanlage zugeführt.

### Gewerbliche Anwendbarkeit

Mit der Erfindung wird ein Gaswaschverfahren und eine korrespondierende Anlage zur Abtrennung acider Gasbestandteile aus Rohsynthesegas zur Verfügung gestellt, die es ermöglichen, die bei der Entspannung des beladenen Waschmittels freigesetzte Volumenarbeit in effektiver Weise zur Energierückgewinnung zu nutzen.

### Bezugszeichenliste

- 1: Leitung
- 2: Vorwäscher
- 3: Leitung
- 4: H₂S-Wäscher
- 5: Leitung
- 6: CO₂-Wäscher
- 7: Leitung
- 8: Leitung
- 9: Leitung
- 10: Leitung
- 11: Entspannungsturbine
- 12: Entspannungsturbine
- 13: Leitung
- 14: Leitung
- 19: Leitung
- 20: Entspannungsturbine
- 22: Leitung
- 24: Vorwäsche-Flashbehälter
- 25: Leitung
- 26: Leitung
- 27: Entspannungsturbine
- 28: Leitung
- 40: erster H₂S-Flashbehälter
- 41: Leitung
- 42: Leitung
- 43: Entspannungsturbine
- 44: Leitung
- 45: zweiter H₂S-Flashbehälter
- 46: Leitung
- 47: Leitung
- 48: Entspannungsturbine
- 49: Leitung
- 50: erster CO₂-Flashbehälter
- 51: Leitung
- 52: Leitung
- 53: Entspannungsturbine
- 54: Leitung
- 55: zweiter CO₂-Flashbehälter
- 56: Leitung
- 57: Leitung
- 58: Entspannungsturbine
- 59: Leitung
- 90: Flashregenerierungsvorrichtung
- 91: Leitung
- 92: Leitung
- 93: Leitung
- 94: Heissregenerierungsvorrichtung
- 95: Leitung
- 96: Leitung
- 98: Leitung

## Patentansprüche

1. Verfahren zur Reinigung eines Rohsynthesegases durch Gaswäsche mit einem Waschmittel, umfassend folgende Schritte:
(a) Bereitstellen und Zuführen des Rohsynthesegases zu einem Vorwäscher zur Entfernung von Spurenkomponenten wie NH₃ und HCN,
(b) Zuführen des gasförmigen Kopfprodukts des Vorwäschers zu einem H₂S-Wäscher zur Entfernung von H₂S,
(c) Zuführen des gasförmigen Kopfprodukts des H₂S-Wäschers zu einem CO₂-Wäscher zur Entfernung von CO₂,
(d) Ausleiten eines gereinigten Synthesegasstroms als gasförmiges Kopfprodukt des CO₂-Wäschers,
(e) Zuführen des flüssigen Sumpfprodukts des Vorwäschers zu mindestens einem Vorwäsche-Flashbehälter unter Entspannen, Zuführen des flüssigen Sumpfprodukts des mindestens einen Vorwäsche-Flashbehälters zu mindestens einer Vorrichtung zur Flashregenerierung und/oder Heissregenerierung des Waschmittels unter Entspannen,
(f) Zuführen des flüssigen Sumpfprodukts des H₂S-Wäschers zu mindestens einem H₂S-Flashbehälter unter Entspannen, Zuführen des flüssigen Sumpfprodukts des mindestens einen H₂S-Flashbehälters zu einem Reabsorber unter Entspannen, Zuführen des flüssigen Sumpfprodukts des Reabsorbers zu mindestens einer Vorrichtung zur Flashregenerierung und/oder Heissregenerierung des Waschmittels unter Entspannen,
(g) Zuführen des flüssigen Sumpfprodukts des CO₂-Wäschers zu mindestens einem CO₂-Flashbehälter unter Entspannen, Zuführen des flüssigen Sumpfprodukts des mindestens einen CO₂-Flashbehälters zu einem Reabsorber unter Entspannen, Zuführen des flüssigen Sumpfprodukts des Reabsorbers zu mindestens einer Vorrichtung zur Flashregenerierung und/oder Heissregenerierung des Waschmittels unter Entspannen, **dadurch gekennzeichnet, dass** bei mindestens einem der Entspannungsschritte in den Verfahrensschritten (e), (f), (g) die jeweilige Flüssigkeit über eine Expansionsvorrichtung geführt wird.

2. Verfahren gemäß Anspruch 1, **dadurch gekennzeichnet, dass** als Expansionsvorrichtung ein Turboexpander verwendet wird.

3. Verfahren gemäß Anspruch 1 oder 2, **dadurch gekennzeichnet, dass** die Expansionsvorrichtung mehrstufig ausgeführt ist.

4. Verfahren gemäß einem der Ansprüche 1 bis 3, **dadurch gekennzeichnet, dass** das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycoldialkylether, vorzugsweise Polyethylenglycol-dimethylether.

5. Anlage zur Reinigung eines Rohsynthesegases durch Gaswäsche mit einem Waschmittel, umfassend folgende, in Fluidverbindung miteinander stehende Bestandteile und Baugruppen:
(a) Mittel zum Bereitstellen und Zuführen des Rohsynthesegases zu einem Vorwäscher zur Entfernung von Spurenkomponenten wie NH₃ und HCN,
(b) Mittel zum Zuführen des gasförmigen Kopfprodukts des Vorwäschers zu einem H₂S-Wäscher zur Entfernung von H₂S,
(c) Mittel zum Zuführen des gasförmigen Kopfprodukts des H₂S-Wäschera zu einem CO₂-Wäscher zur Entfernung von CO₂,
(d) Mittel zum Ausleiten eines gereinigten Synthesegasstroms als gasförmiges Kopfprodukt des CO₂-Wäschers,
(e) Mittel zum Zuführen des flüssigen Sumpfprodukts des Vorwäschers zu mindestens einem Vorwäsche-Flashbehätter unter Entspannen, Mittel zum Zuführen des flüssigen Sumpfprodukts des mindestens einen Vorwäsche-Flashbehälters zu mindestens einer Vorrichtung zur Flashregenerierung und/oder Heissregenerierung des Waschmittels unter Entspannen,
(f) Mittel zum Zuführen des flüssigen Sumpfprodukts des H₂S-Wäschers zu mindestens einem H₂S-Flashbehälter unter Entspannen, Mittel zum Zuführen des flüssigen Sumpfprodukts des mindestens einen H₂S-Flashbehälters zu einem Reabsorber unter Entspannen, Mittel zum Zuführen des flüssigen Sumpfprodukts des Reabsorbers zu mindestens einer Vorrichtung zur Flashregenerierung und/oder Heissregenerierung des Waschmittels unter Entspannen,
(g) Mittel zum Zuführen des flüssigen Sumpfprodukts des CO₂-Wäschers zu mindestens einem CO₂-Flashbehälter unter Entspannen, Mittel zum Zuführen des flüssigen Sumpfprodukts des mindestens einen CO₂-Flashbehälters zu einem Reabsorber unter Entspannen, Mittel zum Zuführen des flüssigen Sumpfprodukts des Reabsorbers zu mindestens einer Vorrichtung zur Flashregenerierung und/oder Heissregenerierung des Waschmittels unter Entspannen,
**dadurch gekennzeichnet, dass** mindestens eine Expansionsvorrichtung vorhanden ist, über die die jeweilige Flüssigkeit geführt und somit entspannt wird.

6. Anlage gemäß Anspruch 5, **dadurch gekennzeichnet, dass** als Expansionsvorrichtung ein Turboexpander verwendet wird.

7. Anlage gemäß Anspruch 5 oder 6, **dadurch gekennzeichnet, dass** die Expansionsvorrichtung mehrstufig ausgeführt ist.
